# FASCICULE DE BREVET EUROPEEN

(11) **EP 2 878 733 B1**
(45) Date de publication et mention de la délivrance du brevet: **16.08.2017**
(21) Numéro de dépôt: 14191810.2
(22) Date de dépôt: 05.11.2014
(51) Int. Cl.: E01F 13/06, G08G 1/017

(54) **Ensemble de lecture automatique de plaques minéralogiques et barrière automatique de contrôle d'accès de véhicules**
Anordnung für die automatische Erkennung von Fahrzeugkennzeichen und automatische Zufahrtskontrollschranke für Fahrzeuge
Assembly for automatic reading of registration plates and automatic barrier for vehicle access control

(30) Priorité: 27.11.2013 FR 1361721
(43) Date de publication de la demande: 03.06.2015
(73) Titulaire: Survision, 92500 Rueil Malmaison (FR)
(72) Inventeur: Jouannais, Jacques, 75006 Paris (FR)
(74) Mandataire: Lavoix

(56) Documents cités:
- EP-A1- 2 597 198
- DE-U1-202009 017 623
- JP-A- 2000 011 297
- US-B1- 7 504 965

## Description

La présente invention concerne le domaine des systèmes de contrôle d'accès pour véhicules prévus pour contrôler l'accès de véhicules à une zone telle qu'un parking public ou privé, un site public ou privé, ou une route.

Il est possible de contrôler l'accès de véhicules à une zone à l'aide d'une barrière automatique dont l'ouverture est commandée à l'aide d'une carte ou d'un badge présenté par le conducteur du véhicule se présentant à la barrière ou installé sur le véhicule.

Néanmoins, ceci nécessite de fournir aux utilisateurs des badges, ce qui représente un coût. En outre, il n'est pas possible de détecter automatiquement l'utilisation d'un même badge par plusieurs utilisateurs.

JP 2000 011297A divulgue une barrière automatique équipée d'un lecteur optique pour la lecture automatique de plaques minéralogiques.

Un des buts de l'invention est de pouvoir fournir une barrière automatique de contrôle d'accès qui soit efficace et facile à mettre en oeuvre à moindre coût.

A cet effet, l'invention propose un ensemble de lecture automatique de plaques minéralogiques selon la revendication 1.

Des caractéristiques optionnelles de l'ensemble de lecture automatique de plaques minéralogiques figurent aux revendications 2 à 8.

L'invention concerne également une barrière automatique pour contrôler l'accès de véhicules à une zone, selon la revendication 9.

Des caractéristiques optionnelles de la barrière automatique figurent aux revendications 10 et 11.

L'invention et ses avantages seront mieux compris à la lecture de la description qui va suivre, donnée uniquement à titre d'exemple, et faite en référence aux dessins annexés, sur lesquels :
- la figure 1 est une vue schématique de dessus d'une barrière automatique de contrôle d'accès;
- la figure 2 est une vue de côté de la barrière ;
- la figure 3 est une vue en coupe selon III-III sur la figure 2 de la barrière ; et
- la figure 4 est un schéma fonctionnel de la barrière.

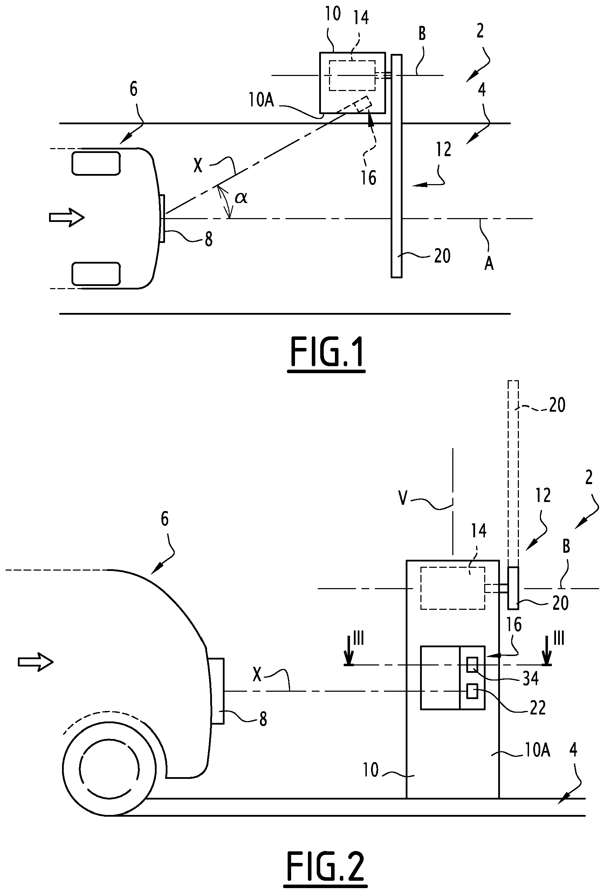

Telle qu'illustrée sur les figures 1 et 2, la barrière 2 automatique est disposée en travers d'une voie de circulation 4 pour la circulation de véhicules automobiles. La partie avant d'un véhicule 6 est illustrée sur les figures 1 et 2. Le véhicule 6 porte à son extrémité avant une plaque minéralogie 8 sur laquelle sont inscrits des caractères, en particulier des caractères alphanumériques.

La voie de circulation 4 s'étend suivant un axe de voie A. La voie de circulation 4 est par exemple une voie d'accès ou de sortie d'un parking public ou privé, une voie d'accès ou de sortie d'un site public ou privé à accès réservé, ou encore une voie d'accès ou de sortie d'une route, par exemple une route à accès réservé ou une autoroute payante.

La barrière 2 contrôle le passage des véhicules dans la voie de circulation 4.

La barrière 2 comprend un fût 10 fixe, un obstacle 12 monté mobile sur le fût 10 entre une position ouverte et une position fermée, et un dispositif d'entraînement 14 pour déplacer l'obstacle 12 entre une position fermée et une position ouverte.

La barrière 2 comprend un lecteur optique 16 configuré pour la lecture automatique de plaques minéralogiques et la commande du dispositif d'entraînement 14 en fonction d'un résultat de lecture.

Le fût 10 est fixé au sol, sur un bord de la voie de circulation 4, de manière à ne pas entraver le passage des véhicules. Le fût 10 est dressé verticalement suivant un axe de fût V (Figure 2). Le fût 10 présente une paroi latérale ou face latérale 10A tournée vers la voie de circulation 4. La face latérale 10A est sensiblement plane. La face latérale 10A et sensiblement parallèle à la direction de voie A.

L'obstacle 12 est mobile par rapport au fût 10 entre une position fermée (Figure 1 et Figure 2 en traits pleins) pour empêcher le passage de véhicules, et une position ouverte (Figure 2 en traits pointillés), pour autoriser le passage de véhicules. En position fermée, l'obstacle 12 s'étend en travers de la voie de circulation 4. En position ouverte, l'obstacle 12 est dégagé de la voie de circulation 4 pour autoriser le passage des véhicules.

Dans l'exemple illustré, la barrière 2 est levante. L'obstacle 12 est monté pivotant sur le fût 10 autour d'un axe de pivotement B qui est horizontal. L'axe de pivotement B est parallèle à la direction de voie A. En position fermée, l'obstacle 12 s'étend horizontalement en porte à faux à partir du fût 10, en travers de la voie de circulation 4. En position ouverte, l'obstacle 12 est relevé (Figure 2).

Dans l'exemple illustré, l'obstacle 12 est formé par une barre ou lisse 20 rectiligne. En position relevée, la lisse 20 s'étend sensiblement verticalement. En variante, l'obstacle 12 est formé par une lisse articulée prévue pour se relever en se pliant de façon à limiter l'emprise verticale de la lisse en position ouverte.

Dans une variante, la barrière 2 est pivotante : l'obstacle 12 est monté pivotant sur le fût 10 autour d'un axe vertical. En position fermée, l'obstacle 12 s'étend horizontalement en travers de la voie de circulation 4, et en position ouverte, l'obstacle 12 s'étend horizontalement sensiblement parallèlement à la direction de voie A.

L'obstacle 12 est monté pivotant sur le fût 10 à proximité d'une extrémité supérieure du fût 10.

Le dispositif d'entraînement 14 est motorisé. Il comprend un moteur 22, de préférence électrique, couplé à l'obstacle 12 pour déplacer l'obstacle 12 entre la position ouverte et la position fermée.

Le lecteur optique 16 est configuré pour la lecture automatique de plaques minéralogiques de véhicules se présentant à la barrière 2.

Le lecteur optique 16 est propre à prendre des images des véhicules se présentant à la barrière et à traiter numériquement chaque image prise de manière à identifier la présence d'une plaque minéralogique et à lire les caractères d'une plaque minéralogique présente sur l'image, par reconnaissance optique de caractères.

Le lecteur optique 16 est monté sur le fût 10. Le lecteur optique 16 est fixé sur le fût 10 de sorte à être immobile par rapport au fût 10. Le lecteur optique 16 est fixé sur le fût 10 à une hauteur inférieure à celle de la liaison entre l'obstacle 12 et le fût 10.

Le lecteur optique 16 est encastré dans le fût 10 de sorte que le lecteur optique 16 est entièrement contenu à l'intérieur du fût 10. Le lecteur optique 16 est ici encastré dans la face latérale 10A du fût 10 tournée vers la voie de circulation 4.

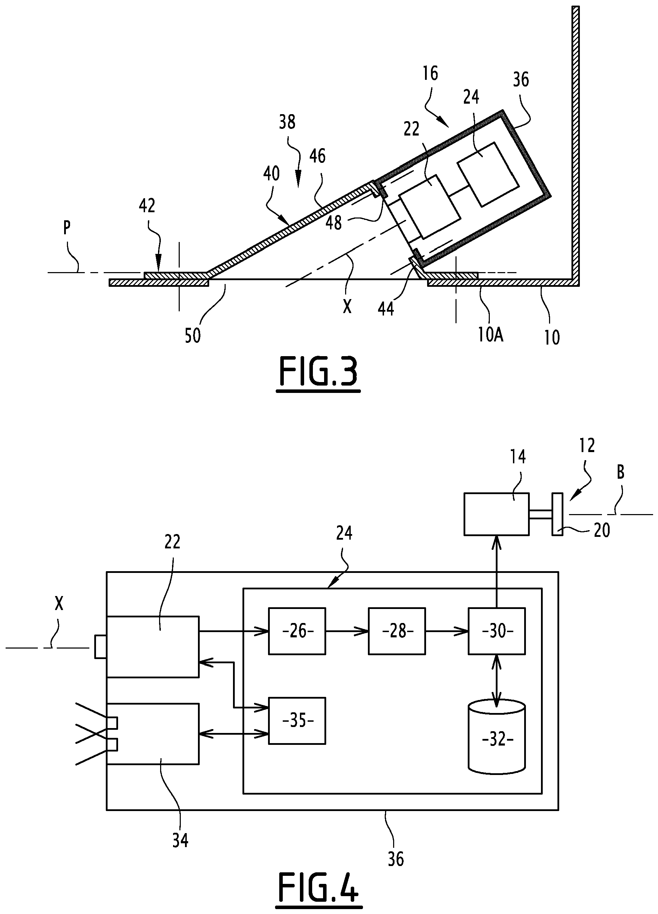

Comme illustré sur les figures 3 et 4, le lecteur optique 16 comprend un appareil de prise de vue 22 numérique. Chaque image numérique prise par l'appareil de prise de vue 22 se présente sous la forme d'une matrice de pixels. L'appareil de prise de vue 22 possède un capteur numérique, par exemple du type connue CCD ou CMOS. L'appareil de prise de vue 22 est de préférence une caméra numérique.

L'appareil de prise de vue 22 est orienté de façon que, en vue de dessus (Figure 1), son axe de prise de vue X est incliné par rapport à la direction de voie A, en étant dirigé vers l'amont ou vers l'aval de la barrière 2 en considérant le sens de passage des véhicules. L'appareil de prise de vue 22 est orienté de façon que son axe de prise de vue fait un angle α compris entre 25° et 65° avec la direction de voie A, de préférence un angle d'environ 45°.

L'appareil de prise de vue 22 est orienté de façon que son axe de prise de vue X est sensiblement horizontal. L'axe de prise de vue X est situé dans un plan perpendiculaire à l'axe de fût V.

L'appareil de prise de vue 22 possède une focale adaptée à la très courte distance séparant la barrière 2 des véhicules.

Ces caractéristiques permettent de prendre des images exploitables pour la lecture automatique de plaques minéralogiques, compte tenu notamment de la distance de l'appareil de prise de vue 22 aux véhicules se présentant à la barrière 2, et des dimensions du champ de visions nécessaires pour prendre des images sur lesquelles les plaques minéralogiques de véhicules de dimensions variées et/ou positionnés différemment sur la voie de circulation 4 sont visibles.

Le lecteur optique 16 comprend un calculateur 24 pour le traitement numérique des images prises par l'appareil de prise de vue 22.

Le calculateur 24 comprend un module de correction 26 pour corriger des aberrations, et en particulier des aberrations géométriques, de chaque image capturée, notamment celles consécutives à la très courte distance séparant la barrière des véhicules. Le module de correction 26 est un composant logiciel mettant en oeuvre un algorithme de correction d'aberration. Le module de correction 26 est exécuté par le calculateur 24.

Compte tenu de la position de l'appareil de prise de vue 22, décalée par rapport à la voie de circulation 4, de l'angle entre l'axe de prise de vue X et un véhicule se présentant à la barrière 2 et de la focale utilisée pour tenir compte de la proximité de la prise de vue relativement à aux dimensions de champs de vision souhaité, les images brutes fournies par l'appareil de prise de vue 22 sont susceptibles de contenir des aberrations géométriques. Le module de correction 26 permet de corriger au moins en partie ces aberrations.

Le calculateur 24 comprend un module de lecture 28 pour lire une plaque minéralogique éventuellement présente sur une image prise par l'appareil de prise de vue 22. Le module de lecture 28 est un composant logiciel. Le module de lecture 28 est exécuté par le calculateur 24.

Le module de lecture 28 est configuré pour traiter une image de manière à localiser une éventuelle plaque minéralogique sur une image, et lire la plaque minéralogique localisée. La localisation est effectuée par exemple par un algorithme d'appariement de masques. La lecture est effectuée par exemple par reconnaissance optique de caractères.

Le module de lecture 28 lit chaque image prise par l'appareil de prise de vue 22, éventuellement corrigée par le module de correction 26.

Le calculateur 24 comprend une module de commande 30 pour recevoir le résultat de la lecture de chaque image fournie par le module de lecture 28 et commander le dispositif d'entrainement 14 de manière à déclencher l'ouverture de la barrière 2 en fonction du résultat de la lecture de l'image.

Le module de commande 30 a accès à une base de données 32 listant des plaques minéralogiques autorisant l'ouverture de la barrière 2 et/ou des plaques minéralogiques interdisant l'ouverture de la barrière 2.

La base de données 32 est de préférence stockée localement dans une mémoire du calculateur 24, pour un traitement rapide des images.

De préférence, le lecteur optique 16 est relié à un ordinateur distant ou un serveur informatique distant par l'intermédiaire d'un réseau ou d'une liaison de transmission de données, pour le paramétrage à distance de la barrière 2, notamment pour la mise à jour à distance de la base de données.

Le lecteur optique 16 comprend un dispositif d'éclairage 34 pour éclairer systématiquement les véhicules se présentant à la barrière et rendre le système opérant de manière totalement indépendante des conditions ambiantes de luminosité.

Le dispositif d'éclairage 34 est configuré pour éclairer la zone de prise de vue avec une lumière dans le domaine non visible, de préférence dans le domaine infrarouge, ce qui évite d'éblouir le conducteur du véhicule. L'appareil de prise de vue 22 est choisi pour permettre une lecture avec ce type d'éclairage.

Le dispositif d'éclairage 34 éclaire la zone de prise de vue en par impulsion de manière à réduire la consommation énergétique et à assurer la non dangerosité oculaire du dispositif d'éclairage. Le dispositif d'éclairage 34 est piloté par un module de synchronisation 35 du calculateur 24 en synchronisme avec l'appareil de prise de vue 22 pour s'allumer pendant les prises de vue et s'éteindre entre les prise de vues.

De préférence, l'appareil de prise de vue 22 prend des images en noir et blanc sous lumière infrarouge, fournie par le dispositif d'éclairage 34.

Le lecteur optique 16 comprend un boîtier 36 logeant l'appareil de prise de vue 22, le calculateur 24 et le dispositif d'éclairage 34. Le boîtier 36 est muni de prises pour le raccordement du lecteur optique 16 à un réseau d'alimentation en électricité et un réseau de communication de données.

Par le choix de composants compacts, le lecteur optique 16 présente un encombrement et un poids très réduits permettant son implantation à l'intérieur du fût 10.

La face latérale 10A du fût 10 est munie d'une fenêtre 50 dans laquelle est encastré le lecteur optique 16.

La barrière 2 comprend un support de fixation 38 (Figure 3) pour la fixation du lecteur optique 16 dans le fût 10, sur la face latérale 10A.

Le support de fixation 38 comprend un capot 40 prévu pour fermer la fenêtre 50 et porter le lecteur optique 16 de sorte que le lecteur optique 16 est disposé d'un côté de la fenêtre 50 et prend des images au travers de la fenêtre 50, l'axe de prise de vue X étant incliné par rapport à une normale au plan de la fenêtre 50.

Le support de fixation 38 présente un cadre 42 périphérique entourant le capot 40. Le cadre 42 s'étend dans un plan P. Le capot 40 s'étend en retrait du plan P du cadre 42. Le lecteur optique 16 est fixé sur le capot 40 de manière à prendre des images au travers du cadre 42, suivant un angle de prise de vue X incliné par rapport à une normale au plan P du cadre 42.

Le lecteur optique 16 est ici fixé derrière le capot 40 qui est muni d'ouvertures 48 pour la prise d'images, et le cas échéant, l'éclairage, au travers du capot 40.

Le lecteur optique 16 est fixé sur le capot 40 par l'intermédiaire de son boîtier 36, par exemple par vissage ou rivetage.

Le capot 40 comprend ici deux pans inclinés 44, 46 s'étendant à partir de bords opposés du cadre 42 à l'écart du plan P et se rejoignant en formant un angle entre eux.

Le lecteur optique 16 est ici fixé derrière le pan incliné 44 qui est muni des ouvertures 48 pour la prise de vue et, le cas échéant l'éclairage.

Le lecteur optique 16 monté sur le support de fixation 38 est en retrait du plan P du cadre 42 et a son axe de prise de vue X passant au travers du cadre 42 en étant incliné par rapport à une normal au plan P du cadre 42.

Le support de fixation 38 est fixé par l'intermédiaire de son cadre 42 aux bords de la fenêtre 50, par exemple par vissage ou rivetage. Le cadre 42 fixé aux bords de la fenêtre 50 est coplanaire avec la fenêtre 50.

Ainsi, le lecteur optique 16 porté par le support de fixation 38 fixé sur la face latérale 10A en regard de la fenêtre 50 se situe en retrait vers l'intérieur du fût 10 par rapport à la face latérale du fût 10 tout en ayant son axe de prise de vue X dirigé au travers de la fenêtre 50 et incliné par rapport à une normale au plan de la fenêtre 50.

Le support de fixation 38 définit une position unique pour le lecteur optique 16. Dès lors que le support de fixation 38 est fixé sur une paroi, le lecteur optique 16 est dans une position unique déterminée par rapport à cette paroi. Le lecteur optique 16 est fixé sur le fût 10 de manière à être immobile. Il ne nécessite pas de réglage, notamment de réglage de l'orientation de l'appareil de prise de vue 22. Le lecteur optique 16 est fixé dans le fût 10 à l'aide du support de fixation 38 sans possibilité de réglage de la position du lecteur optique 16.

Le lecteur optique 16 est ainsi intégré dans le fût 10 de manière à rendre l'installation strictement répétitive (sans réglage) quel que soit la configuration du site. L'installation du lecteur optique 16 dans le fût 10 de la barrière 2 assure une position adéquate, quelle que soit la configuration du site.

Le contrôle d'accès utilisant les plaques minéralogies permet un fonctionnement fiable et fluide, notamment pour les conducteurs. Il n'est pas nécessaire d'équiper les conducteurs ou leurs véhicules de badges ou de cartes d'accès. Le contrôle d'accès est effectué sur la base d'un identifiant propre au véhicule - la plaque minéralogique - plutôt que sur une carte un badge d'accès propre au porteur qui peut changer de véhicule.

Le lecteur optique 16 intégré dans le fût 10 de la barrière 2 facilite l'implantation de la barrière à un point de contrôle d'accès, en limitant notamment le nombre d'éléments à fixer au point de contrôle d'accès et le nombre de liaison entre les différents éléments.

Le lecteur optique 16 monté immobile sur la barrière 2, est correctement orienté pour lire les plaques minéralogiques dès lors que la barrière 2 est correctement disposée par rapport à la voie de circulation 4. Ceci facilite l'implantation de la barrière 2 et rend possible la mise en place de fonctions de contrôle d'accès par lecture des plaques minéralogiques sur des sites qui ne pouvaient pas être équipés jusqu'à présent, en raison de la difficulté d'implantation du lecteur optique.

Le lecteur optique 16 peut facilement être ajouté a posteriori (montage en « retrofit ») sur une barrière 2 déjà installée.

Le lecteur optique 16 comprend un ensemble de prise de vue (appareil de prise de vue 22 et dispositif d'éclairage 34) adapté spécifiquement à la très courte distance de prise de vue résultant de la courte distance entre la barrière 2 et des véhicules à contrôler se présentant à la barrière 2.

L'installation du lecteur optique 16 dans le fût 10 est rendu possible notamment par la miniaturisation et l'allégement du lecteur optique 16 et d'autre part par l'utilisation d'algorithmes de correction des aberrations adaptés à la courte distance entre le lecteur optique 16 implanté dans le fût 10 et les véhicules se présentant à la barrière.

## Revendications

1. Ensemble de lecture automatique de plaques minéralogiques comprenant un lecteur optique (16) possédant un appareil de prise de vue (22) ayant un axe de prise de vue (X) et un calculateur (24) pour la lecture automatique de plaques minéralogiques sur des images prises par l'appareil de prise de vue (22), et un support de fixation (38) pour la fixation du lecteur optique (16) sur une paroi (10A) munie d'une fenêtre (50), notamment une face latérale d'un fût (10) de barrière de contrôle d'accès de véhicules, le support de fixation (38) comprenant un capot (40) prévu pour fermer la fenêtre (50) et porter le lecteur optique (16) de sorte qu'il est disposé d'un côté de la paroi (10A) et prend des images de l'autre côté au travers de la fenêtre (50), l'axe de prise de vue (X) étant incliné par rapport à une normale au plan de la fenêtre (50).

2. Ensemble selon la revendication 1, dans lequel le lecteur optique comprend l'appareil de prise de vue (22) et un module de lecture (28) pour la lecture automatique de plaques minéralogiques sur les images prises par l'appareil de prise de vue (22), par traitement numérique.

3. Ensemble selon la revendication 2, dans lequel le lecteur optique (16) comprend un correcteur d'aberration (26) pour corriger des aberrations des images prises par l'appareil de prise de vue (22) avant leur lecture.

4. Ensemble selon l'une quelconque des revendications précédentes, dans lequel le lecteur optique (16) comprend un dispositif d'éclairage (34) synchronisé à l'appareil de prise de vue (22) pour illuminer une zone de prise de vue, de préférence avec une lumière infrarouge.

5. Ensemble selon l'une quelconque des revendications précédentes, dans lequel le lecteur optique (16) est configuré pour commander l'ouverture et la fermeture de la barrière (2) en fonction du résultat de la lecture.

6. Ensemble selon l'une quelconque des revendications précédentes, dans lequel le lecteur optique (16) comprend une base de données (32) listant des plaques minéralogies autorisant l'ouverture de la barrière (2).

7. Ensemble selon l'une quelconque des revendications précédentes, dans lequel le support de fixation (38) présente un cadre (42) périphérique entourant le capot (40).

8. Ensemble selon la revendication 7, dans lequel le capot (40) comprend deux pans inclinés (44, 46) s'étendant à partir des bords opposés du cadre (42) à l'écart d'un plant (P) du cadre (42) et se rejoignant en formant un angle entre eux, le lecteur optaique (16) étant fixé derrière un pan incliné (44).

9. Barrière automatique pour contrôler l'accès de véhicules à une zone, la barrière comprenant un fût (10) ayant une face latérale (10A) munie d'une fenêtre (50), un obstacle (12) monté mobile sur le fût (10) entre une position fermée et une position ouverte, et un ensemble de lecture automatique de plaques minéralogiques selon l'une quelconque des revendications précédentes, le support de fixation (38) étant fixé sur la face latérale (10A) en regard de la fenêtre de sorte que le lecteur optique (16) est monté dans le fût (10).

10. Barrière selon la revendication 9, dans laquelle le lecteur optique (16) est disposé dans le fût (10) de manière à viser suivant une direction faisant, en vue de dessus, un angle compris entre 25° et 65° avec la direction d'une voie de circulation contrôlée par la barrière.

11. Barrière selon la revendication 9 ou 10, dans laquelle le lecteur optique (16) affleure une surface externe du fût (10) ou est en retrait vers l'intérieur du fût (10) par rapport une surface externe du fût (10).

## Patentansprüche

1. Einrichtung zum automatischen Lesen von Nummernschildern, aufweisend einen optischen Leser (16), welcher eine Vorrichtung zur Bildaufnahme (22), welche eine Bildaufnahmeachse (X) aufweist, und einen Rechner (24) zum automatischen Lesen der Nummernschilder auf den mittels der Vorrichtung zur Bildaufnahme (22) aufgenommenen Bildern aufweist, und einen Befestigungshalter (38) für die Befestigung des optischen Lesers (16) an einer mit einem Fenster (50) versehenen Wand (10A), insbesondere einer Seitenwand eines Schafts (10) einer Schranke zur Zugangskontrolle von Fahrzeugen, wobei der Befestigungshalter (38) eine Abdeckung (40) aufweist, welche vorgesehen ist, um das Fenster (50) zu verschließen und den optischen Leser (16) zu halten, so dass er an einer Seite der Wand (10A) angeordnet ist und die Bilder der anderen Seite durch das Fenster (50) hindurch aufnimmt, wobei die Bildaufnahmeachse (X) schräg ist bezüglich einer Normalen zur Ebene des Fenster (50).

2. Einrichtung gemäß Anspruch 1, wobei der optische Leser die Vorrichtung zur Bildaufnahme (22) und ein Lesemodule (28) zum automatischen Lesen der Nummernschilder auf den mittels der Vorrichtung zur Bildaufnahme (22) aufgenommenen Bildern durch digitale Bearbeitung aufweist.

3. Einrichtung gemäß Anspruch 2, wobei der optische Leser einen Aberrationskorrektor (26) zum Korrigieren von Aberrationen der mittels der Vorrichtung zur Bildaufnahme (22) aufgenommenen Bilder vor deren Lesen aufweist.

4. Einrichtung gemäß irgendeinem der vorhergehenden Ansprüche, wobei der optische Leser (16) eine Beleuchtungsvorrichtung (34), welche mit der Vorrichtung zur Bildaufnahme (22) synchronisiert ist, zum Beleuchten eines Bildaufnahmebereichs, bevorzugt mit einem Infrarotlicht, aufweist.

5. Einrichtung gemäß irgendeinem der vorhergehenden Ansprüche, wobei der optische Leser (16) dazu eingerichtet ist, das Öffnen und das Schließen der Schranke (2) in Abhängigkeit von dem Ergebnis des Lesens zu steuern.

6. Einrichtung gemäß irgendeinem der vorhergehenden Ansprüche, wobei der optische Leser (16) eine Datenbank (32) aufweist, welche die Nummernschilder auflistet, welche die Öffnung der Schranke (2) autorisieren.

7. Einrichtung gemäß irgendeinem der vorhergehenden Ansprüche, wobei der Befestigungshalter (38) einen Umfangsrahmen (42), welcher die Abdeckung (40) umgibt, aufweist.

8. Einrichtung gemäß Anspruch 7, wobei die Abdeckung (40) zwei geneigte Stücke (44, 46), welche sich von gegenüberliegenden Rändern des Rahmens (42) aus von einer Ebene (P) des Rahmens (42) weg erstrecken und sich unter Ausbilden eines Winkels zwischen einander treffen, wobei der optische Leser (16) hinter einem schrägen Stück (44) befestigt ist.

9. Automatische Schranke zum Kontrollieren des Zugangs von Fahrzeugen in einen Bereich, wobei die Schranke einen Schaft (10), welcher eine mit einem Fenster (50) versehene Seitenwand (10A) aufweist, ein Hindernis (12), welches zwischen einer Geschlossen-Stellung und einer Geöffnet-Stellung bewegbar an dem Schaft (10) montiert ist, und eine Einrichtung zum automatischen Lesen von Nummernschildern gemäß irgendeinem der vorhergehenden Ansprüche aufweist, wobei der Befestigungshalter (38) an einer Seitenwand (10A) in Bezug auf das Fenster so befestigt ist, dass der optische Leser (16) in dem Schaft (10) montiert ist.

10. Schranke gemäß dem Anspruch 9, wobei der optische Leser (16) in dem Schaft (10) angeordnet ist, so dass er in eine Richtung zielt, welche, in der Draufsicht betrachtet, einen Winkel zwischen 25° und 65° mit der Richtung einer Fahrspur, welche mittels der Schranke kontrolliert wird, bildet.

11. Schranke gemäß dem Anspruch 9 oder 10, wobei der optische Leser (16) mit einer Außenfläche des Schafts (10) bündig ist oder bezüglich einer Außenfläche des Schafts (10) nach hinten in Richtung zum Inneren des Schafts (10) versetzt ist.

## Claims

1. Automatic number plate reading unit comprising an optical reader (16) with a photographic apparatus (22) having a photographic axis (X) and a computer (24) for the automatic reading of number plates on the images taken by the photographic apparatus (22), and an attachment support (38) for attaching the optical reader (16) to a wall (10A) provided with a window (50), particularly a lateral face of a vehicle access control barrier barrel (10), the attachment support (38) comprising a cover (40) provided to close the window (50) and hold the optical reader (16) so that it is disposed on one side of the wall (10A) and takes images from the other side through the window (50), the photographic axis (X) being inclined with respect to a normal to the plane of the window (50).

2. Unit according to claim 1 wherein the optical reader comprises the photographic apparatus (22) and a reading module (28) for the automatic reading of number plates the images taken by the photographic apparatus (22), by digital processing.

3. Unit according to claim 2, wherein the optical reader (16) comprises an aberration corrector (26) to correct aberrations of the images taken by the photographic apparatus (22) prior to their reading.

4. Unit according to any one of the preceding claims, wherein the optical reader (16) comprises a lighting device (34) synchronised with the photographic apparatus (22) to illuminate a photographic area, preferably with infrared light.

5. Unit according to any one of the preceding claims, wherein the optical reader (16) is configured to control the opening and closing of the barrier (2) based on the results of the reading.

6. Unit according to any one of the preceding claims, wherein the optical reader (16) comprises a database (32) listing number plates for which the opening of the barrier (2) is authorised.

7. Unit according to any one of the preceding claims, wherein the attachment support (38) has a peripheral frame (42) surrounding the cover (40).

8. Unit according to claim 7, wherein the cover (40) comprises two sloped sections (44, 46) extending from the opposite edges of the frame (42) well away from a planting (P) of the frame (42) and joining together forming an angle between them, the optical reader (16) being secured behind one sloped section (44).

9. Automatic barrier to control access of vehicles to an area, the barrier comprising a barrel (10) having a lateral face (10A) equipped with a window (50), an obstacle (12) movably mounted on the barrel (10) between a closed position and an open position, and automatic number plate reading unit according to any one of the preceding claims, the attachment support (38) being secured on the lateral face (10A) facing the window in such a way that the optical reader (16) is mounted inside the barrel (10).

10. Barrier according to claim 9, wherein the optical reader (16) is disposed inside the barrel (10) in such a way as to aim in a direction making an angle, viewed from above, between 25° and 65° with the direction of traffic controlled by the barrier.

11. Barrier according to claim 9 or 10, wherein the optical reader (16) is flush with an external surface of the barrel (10) or is set back towards the interior of the barrel (10) with respect to an external service of the barrel (10).
